# EUROPEAN PATENT APPLICATION

(11) **EP 3 610 725 A1**
(43) Date of publication of application: **19.02.2020**
(21) Application number: 18188912.2
(22) Date of filing: 14.08.2018
(51) Int. Cl.: A01M 7/00

(54) **A WEED CONTROL SYSTEM**

(71) Applicant: Bayer AG, 51373 Leverkusen (DE)
(72) Inventor: Kijlstra, Johan, 51519 Odenthal (DE); Frießleben, Reinhard, 51375 Leverkusen (DE)
(74) Representative: BIP Patents

(57) **Abstract**

The present invention relates to a weed control apparatus (10) for a vehicle. It is described to provide (210) a processing unit with at least one image of an environment. The processing unit analyses (220) the at least one image to activate at least one chemical spray unit. At least one chemical spray unit atomizes and charges (230) a liquid chemical. The at least one chemical spray unit has at least one part configured to be held at high voltage with respect to zero volts potential. The at least one high voltage power supply and the at least one chemical spray unit are configured to hold the at least one part of the at least one chemical spray unit at a high voltage with respect to zero volts potential, such that the atomized liquid chemical is electrically charged. The at least one chemical spray unit is located within or on at least one unmanned aerial vehicle. Each unmanned aerial vehicle has a chemical spray unit. At least one liquid chemical reservoir is configured to hold a liquid chemical. The at least one chemical spray unit is in liquid communication with the at least one liquid chemical reservoir. The at least one unmanned aerial vehicle is in electrical connection with a ground based housing unit.

## Description

### FIELD OF THE INVENTION

The present invention relates to a weed control system, to a weed control method, as well as to a computer program element and a computer readable medium.

### BACKGROUND OF THE INVENTION

The general background of this invention is weed control. Certain industrial areas and areas around railway tracks, and agricultural areas need to have the vegetation controlled. For railways, such control improves visibility from the perspective of people on the train such as the driver and improves visibility from the perspective of people working on the tracks. Such control can lead to improved safety. Additionally, vegetation can disrupt or damage tracks and associated signaling and communication lines. Control of the vegetation is then required to mitigate this. Vegetation control, also called weed control, can be very time and resource consuming, especially if carried out manually. A weed sprayer train, with a herbicide contained in chemical tanks on the train can be sprayed onto the track and surrounding area to control the vegetation. Also, weeds need to be controlled in an around agricultural fields of crop plants. However, such weed control can be expensive, and the general public increasingly wishes to see a reduction in environmental impact.

### SUMMARY OF THE INVENTION

It would be advantageous to have an improved weed control system.

The object of the present invention is solved with the subject matter of the independent claims, wherein further embodiments are incorporated in the dependent claims. It should be noted that the following described aspects and examples of the invention apply also for the weed control system, the weed control method, and for the computer program element and the computer readable medium.

According to a first aspect, there is provided a weed control system, comprising:
- an input unit;
- a processing unit;
- at least one chemical spray unit;
- at least one high voltage power supply;
- at least one liquid chemical reservoir;
- a ground based housing unit;
- at least one unmanned aerial vehicle.

The at least one chemical spray unit is located within or on the at least one unmanned aerial vehicle, wherein each unmanned aerial vehicle has a chemical spray unit. The at least one liquid chemical reservoir is configured to hold a liquid chemical. The at least one chemical spray unit is in liquid communication with the at least one liquid chemical reservoir. The at least one unmanned aerial vehicle is in electrical connection with the ground based housing unit. The input unit is configured to provide the processing unit with at least one image of an environment. The processing unit is configured to analyse the at least one image to activate the at least one chemical spray unit. The at least one chemical spray unit is configured to atomize the liquid chemical. The at least one chemical spray unit has at least one part configured to be held at high voltage with respect to zero volts potential. The at least one high voltage power supply and the at least one chemical spray unit are configured to hold the at least one part of the at least one chemical spray unit at a high voltage with respect to zero volts potential, such that the atomized liquid chemical is electrically charged.

In an example, the ground based housing unit is a vehicle.

In other words, a liquid chemical control system, for a vehicle, uses a spray unit, or a number of spray units, that can spray a liquid chemical such as a herbicide or insecticide. The spray units can atomize and charge the liquid chemical being sprayed in order to improve the efficiency of spraying because the charged atomized liquid is attracted to the vegetation, and spraying at low spray volumes is enabled. However, the spray units are housed within UAVs or drones, and can be fed with the liquid chemical and electrical power from a ground based unit such as a vehicle to which the UAVs are tethered. In this manner, the ground based vehicle does not become contaminated by the spray and worker contamination can be minimized, because the UAVs can operate at a distance from the vehicle and away from where workers may be located. Also, areas that the vehicle cannot easily reach can be sprayed. As the UAVs take electrical power from the vehicle and are provided with the liquid chemical from the ground based unit (e.g. the vehicle) they can also operate for extended periods of time.

In addition to having access to a chemical reservoir that need not be carried by a UAV, by providing an electrical connection back to a ground based unit, such as a vehicle, electrostatic spraying is enabled because the UAV has access to ground potential via this electrical connection. Also, by tethering to the ground, certain airspace requirements are lessened because the UAVs are not free-flying, thereby increasing the areas of applicability of UAVs used for spraying.

Furthermore, as the vehicle moves around an environment, imagery of that environment is analysed and used to activate the spray unit(s) to kill weeds/insects. The plants such as weeds growing on the ground will be at ground potential, or substantially at zero volts, and an atomized liquid weed control "spray" will be attracted to the plants/weeds to kill the weeds or the insects on the plants and/or weeds. This means that by activating the spray units, based on imagery, only areas where there are weeds and/or insect pests need to be sprayed, leading to less chemical being used. And, more of the liquid chemical that is sprayed ends up on the plants/weeds because the spray is attracted to the plants/weeds leading to increased efficacy of killing weeds and pests. Because the weeds are growing on the ground, and will be slightly closer to the nozzles of the spray unit than the ground itself, the electric field strength (volts per metre) between the spray unit and the weed is larger than between the spray unit and the ground (earth) itself, leading to the liquid spray being preferentially deposited on the weeds/plants and insects on the plants rather on the ground itself. Furthermore, liquid spray that passes the front side of, for example, a leaf of a weed/plant is attracted to and deposited on the back-side of the leaf due to the wraparound effect, leading to more of the weed/plant being coated with chemical and an increase in the efficacy of spraying and/or enabling less chemical to be used or a less aggressive chemical to be used, with positive associated environmental effects resulting. Thus, electrically charged liquid weed control droplets or particles of the atomized liquid can change direction and be deposited on the top, sides and bottom of the weed(plant even when only sprayed from the top.

As the spray unit is operating from a UAV, where spraying can be for a moving platform, there is no particular problem with vegetation not requiring to be a very good conductor, because there is no excessive charge build up on the weed/plant, because as the spray unit is moving, each weed/plant only receives a certain amount of spray before the spray unit has moved laterally and is available to spray an adjacent weed/plant if image analysis indicates that there is a weed/plant with insects for which the spray unit needs to be activated. The same applies for stationary spraying, where the duration of spraying at one location is not enough for significant charging up of the weed/plant to occur before the UAV flies on and sprays at another location

To put this another way, creation of an electrostatic field pulls the atomized liquid spray particles onto the weeds/plants being sprayed leading to increase coverage of weeds/plants with the weed or insect control chemical. The effects of wind are mitigated and the effect of a spray system being mounted on a moving UAV are mitigated, which could otherwise lead to significant amounts of spray being blown away from the direction of the weeds. These effects are addressed because the atomized liquid spray is attracted towards the weeds due to electrostatic forces. Additionally, liquid weed control chemical, in the form of droplets, is less likely to bounce off the weed/plant, which can happen if the weed/plant has for example a waxy surface, because the drops are electrostatically attracted to the weed/plant.

In this manner, the transfer efficiency of liquid control chemical to weeds/plants to control weeds and insect pests is increased.

In an example, the at least one high voltage power supply is located within or on the ground based housing unit.

Thus, the high voltage generation equipment is located on the ground, with a HT cable running to the UAV(s). In this way, less weight is required to be carried by the UAV(s). There can also be a low voltage cable running alongside the HT cable, providing power for the motor and rotors and other electrical systems of the UAV. Thus, in addition to not having to carry the high voltage generator (power supply) the UAV does not have to carry batteries.

In an example, the at least one high voltage power supply is located within or on the at least one unmanned aerial vehicle; wherein each unmanned aerial vehicle has a high voltage power supply.

Thus, for example each UAV can have a high voltage power supply such as a Cockcroft-Walton generator (for example that are found in television sets, microwave ovens and photocopiers). The UAV can be fed with a relatively low voltage electrical supply from the ground based unit such as the vehicle, where this supply can be used to power the UAV and drive its rotors and power its other system. However, this supply is also used by the high voltage supply (e.g. the Cockcroft-Walton generator) to generate a high voltage that holds a part of the spray gun of that UAV at a high voltage, in order to charge the atomized spray. The low voltage supply can then be used to activate the atomizer of the spray gun, with the high voltage supply being used to provide the high voltage to the part of the spray gun in order to charge the atomized spray.

Thus, a normal electrical cable can be provided to the UAV(s), and even though the UAV(s) now carry the high voltage generation equipment themselves, because the UAV(s) are provided with electrical power they do not have to carry batteries, as the power from the ground can be used to power the UAV's electrical systems and drive the motor for the rotors.

In an example, the at least one liquid chemical reservoir is located within or on the at least one unmanned aerial vehicle; wherein each unmanned aerial vehicle has a liquid chemical reservoir.

In this way, because the UAV takes its electrical power from the ground it can have a powerful motor and lift heavier loads than if it was battery powered, enabling large internal loads of liquid chemical to be carried by the UAV.

In an example, the at least one liquid chemical reservoir is located within or on the ground based housing unit.

Thus, the UAVs do not have to carry heavy loads of liquid chemical, with the chemical being piped to the UAV from the ground. If necessary a small holding tank can be located within each UAV that is continually replenished. Thus, the UAV can spray at a spray rate faster than the rate that liquid chemical is being piped to the UAV. But, the UAV does not generally continuously spray but sprays at one location and flies to the next in order to spray, and during this whole period the small holding tank can be replenished. This reduces the size of the pipe or conduit required to run from the ground based main reservoir to the UAV.

In an example, the at least one chemical spray unit is configured such that the atomized liquid weed control chemical is charged after it has been atomized.

In this way, a reservoir of liquid weed control chemical can be electrically isolated from the high voltage part of the spray unit(s), and can be held at ground potential leading to a simply and safe system. In other words, the liquid in the conduit and the conduit itself that runs from the UAV back to the ground based housing unit does not get raised to a high potential, enabling a lighter and less expensive cable to be used. Furthermore, liquids can be used that need not be electrically conductive and indeed non-conductive liquid weed control chemicals and insecticides can be atomized and then charged.

In an example, the at least one part comprises an electrode configured to be positioned within the atomized liquid weed control chemical.

In other words an ionization needle is used within a Corona charging system, where an electrode that can be pointed or sharply curved is raised to a high electrical potential, and the intense electric field at the electrode breaks down the surrounding air to create ions, which then attach themselves to the atomized liquid weed control chemical to charge it. Thus, the at least one chemical spray unit can comprise a number of spray guns with atomizing nozzles housed in different UAVs, and a charging electrode is located at or near the tip of each atomizing nozzle. An electric field is also created between the at least one part (charging electrode) and the weeds growing on the earth (ground) which are at zero volts and the atomized liquid weed control chemical, which is now electrostatically charged, is attracted to the weeds.

In an example, the processing unit is configured to analyse the at least one image to determine at least one location for activation of the at least one chemical spray unit.

In an example, analysis of the at least one image to determine at least one location for activation of the at least one chemical spray unit comprises a determination of at least one location of vegetation in the environment.

In other words, image processing can be used in order to determine the areas of vegetation in the acquired imagery, and the chemical spray units can be activated at those locations. Thus, in some situations all vegetation in an area needs to be controlled, for example along and around railway tracks. The plant need not be identified in terms of the species of plant, but just sprayed with a herbicide, but less liquid needs to be sprayed because this only occurs where there is vegetation.

In an example, analysis of the at least one image to determine the at least one location for activation of the at least one chemical spray unit comprises a determination of at least one type of weed and/or a determination of at least one type of pest/insect.

In other words, the at least one chemical spray unit can be activated in a manner to account for the type or types of weeds to be controlled. Thus, the ground based housing unit could have for example three or four tanks (reservoirs) of different herbicides and three tanks of insecticides/pesticides. Each tank can be connected to a different UAV. When a particular weed has been identified, it can be determined by the processing unit which particular liquid chemical should be sprayed at that location, and the appropriate UAV flies to this location and sprays the plant with in an efficient manner using an electrostatic spray gun, and the same occur with respect to identified pests/insects.

Furthermore, the processing unit can determine how much liquid chemical should be sprayed at a location on the basis of image processing. Thus for example, one type of weed may require only a short duration of liquid weed control spray to kill that weed, but a different type of weed may require a longer duration of the same liquid weed control spray to kill the weed. Also, for example, a very strong weed control chemical can be in one tank linked to a particular UAV and used to kill difficult to control weeds, and a second tank can house a weaker chemical and be linked to a different UAV. Thus, the strong chemical can be used sparingly, only when it is needed in relation to a detection that difficult to control weeds have been found. The weaker chemical can then be used to control other weeds, thereby providing environmental and cost benefits. Also, different chemicals being sprayed may require different electrostatic fields to optimize the electrostatically improved transfer to the weeds, because the liquids may have different surface tension and/or viscosities leading to the formation of different atomized drop sizes. Thus, this information is used when a UAV sprays a particular liquid, and thus a UAV can on one day spray one liquid and on a different day spray a different liquid.

In an example, the system comprises at least one camera, and wherein the at least one image was acquired by the at least one camera.

In an example, each unmanned aerial vehicle has a camera of the at least one camera.

According to a second aspect, there is provided a weed control method, comprising:
a) providing a processing unit with at least one image of an environment;
b) analysing by the processing unit the at least one image to activate at least one chemical spray unit;
c) atomizing and charging a liquid chemical by the at least one chemical spray unit; wherein the at least one chemical spray unit has at least one part configured to be held at high voltage with respect to zero volts potential; and wherein the at least one high voltage power supply and the at least one chemical spray unit are configured to hold the at least one part of the at least one chemical spray unit at a high voltage with respect to zero volts potential, such that the atomized liquid chemical is electrically charged; and
   wherein, the at least one chemical spray unit is located within or on at least one unmanned aerial vehicle, wherein each unmanned aerial vehicle has a chemical spray unit; wherein, at least one liquid chemical reservoir is configured to hold a liquid chemical; wherein, the at least one chemical spray unit is in liquid communication with the at least one liquid chemical reservoir; wherein, the at least one unmanned aerial vehicle is in electrical connection with a ground based housing unit.

According to another aspect, there is provided a computer program element for controlling a system according to the first aspect, which when executed by a processor is configured to carry out the method of the second aspect.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of a weed control system;
Fig. 2 shows a weed control method;
Fig. 3 shows a schematic set up of an example of parts of a weed control system;
Fig. 4 shows a schematic set up of an example of parts of a weed control system;
Fig. 5 shows a schematic representation of a railway track and surrounding area; and
Fig. 6 shows a schematic set up of an example of a weed control system.

### DETAILED DESCRIPTION OF EMBODIMENTS

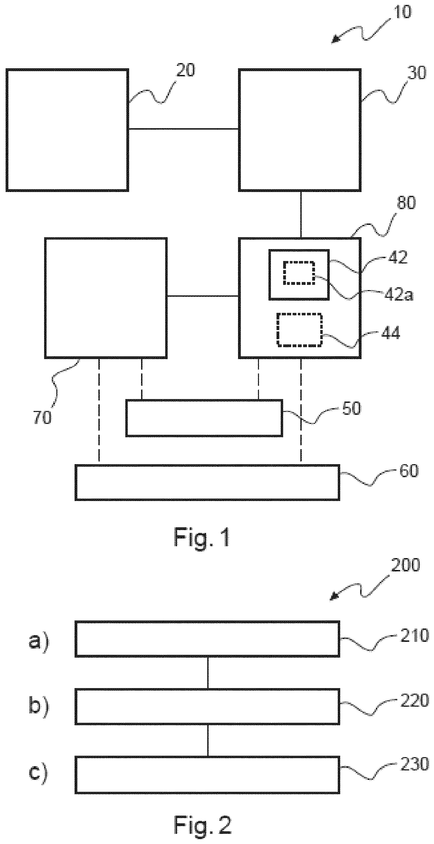

Fig. 1 shows an example of a weed control system 10. The system 10 comprises an input unit 20, a processing unit 30, at least one chemical spray unit 40, at least one high voltage power supply 50, at least one liquid chemical reservoir 60, a ground based housing unit 70, at least one unmanned aerial vehicle 80. The at least one chemical spray unit is located within or on the at least one unmanned aerial vehicle, wherein each unmanned aerial vehicle has a chemical spray unit. The at least one liquid chemical reservoir is configured to hold a liquid chemical. The at least one chemical spray unit is in liquid communication with the at least one liquid chemical reservoir. The at least one unmanned aerial vehicle is in electrical connection with the ground based housing unit. The input unit is configured to provide the processing unit with at least one image of an environment. The processing unit is configured to analyse the at least one image to activate the at least one chemical spray unit. The at least one chemical spray unit is configured to atomize the liquid chemical. The at least one chemical spray unit has at least one part 42 configured to be held at high voltage with respect to zero volts potential. The at least one high voltage power supply and the at least one chemical spray unit are configured to hold the at least one part of the at least one chemical spray unit at a high voltage with respect to zero volts potential, such that the atomized liquid chemical is electrically charged.

According to an example, the ground based housing unit is a vehicle.

In an example the high voltage has a magnitude of 5kV. In an example the high voltage has a magnitude of 10kV. In an example the high voltage has a magnitude of 20kV. In an example the high voltage has a magnitude 40kV. In an example the high voltage has a magnitude 60kV. In an example the high voltage has a magnitude 80kV. In an example the high voltage has a magnitude 100kV. In an example the high voltage has a magnitude 120kV. In an example the high voltage has a magnitude 140kV. In an example the high voltage has a magnitude 160kV. In an example the high voltage has a magnitude 180kV. In an example the high voltage has a magnitude 200kV.

In an example, the high voltage at which the at least one part of the at least one chemical spray unit is held is negative with respect to zero volts potential.

In an example, the system is configured such that the atomized liquid chemical is negatively charged.

In an example, the system comprises an output unit that is in communication with the processing unit, and wherein the output unit is configured to activate the at least one chemical spray unit.

In an example, the system is operating in real-time, where images are acquired and immediately processed and the chemical spray unit(s) are immediately activated to control weeds/insect pests. Thus, for example the system can acquire imagery of its environment and process that imagery to activate the spray units in real-time.

In an example, the system is operating in an offline mode, where images are acquired (by the system or by another appropriate system) of an environment and later processed by the system to activate the chemical spray unit. Thus for example, a first vehicle, such as a car, train, lorry, tractor or unmanned aerial vehicle (UAV) or drone equipped with one or more cameras can travel within an environment and acquire imagery. This imagery can then be processed, later, by the system that is moving around the around, to activate the chemical spray units of UAVs to control weeds/insect pests, for example around a railway track or in and around a field that can contain a crop.

In an example, the at least one chemical spray unit comprises an atomizer 44 configured to atomize the liquid chemical. In an example the atomizer is configured to use compressed air to atomize the liquid chemical. In an example, the atomizer comprises a spinning metal disc. Thus, the rotational bell system can be used to atomize the liquid chemical, and the spinning disc can also be the part that is held at a high voltage, such that the metal disc also imparts the electrical charge to the atomized liquid.

It is to be noted that "atomized" does not mean individual atoms, but relates to the standard use of this term with respect to spray systems, meaning a fine mist of particles that can range in sizes.

In an example, the at least one chemical spray unit is configured such that the liquid chemical is charged prior to it being atomized. In an example the at least one part that is held at a high potential is in contact with the liquid within a spray gun, in which case each spray unit has a spray gun and each spray gun has a part in contact with the liquid weed control chemical that is held at high potential. In an example the at least one part that is held at a high potential is in contact with the liquid within a conduit that leads to a spray gun, in which case each spray unit has a spray gun and each spray gun has a conduit inside of which is a part in contact with the liquid weed control chemical that is held at high potential. In an example the at least one part that is held at a high potential is in contact with the liquid within a spray gun, in which case each spray unit has a spray gun and each spray gun connects to a reservoir that holds a liquid weed control chemical with these forming the at least one chemical spray unit, and therefore there needs to be only one part that is inside the reservoir that is in contact with the liquid weed control chemical that is held at high potential.

In other words, a Contact charging system is used, where the liquid weed control chemical is directly charged prior to it being atomized.

In an example, the at least one chemical spray unit is configured such that the liquid chemical is at least partially charged as it is being atomized.

In an example, frictional charging (or Tribo charging) is used to charge the liquid weed control chemical. In this way, a simple spray system can be constructed, where the liquid is atomized and charged due to the geometry of the nozzle itself, as is known for spray systems utilizing frictional charging, and an electric field between the spray unit, at high voltage, and the weeds being sprayed, at ground potential. Thus, a part of the at least one spray unit that is at high voltage does not need to be in contact with the liquid weed control chemical, which can be at ground potential providing improved safety.

In an example, the processing unit is configured to analyse the at least one image to determine at least one mode of operation to be used for weed control and/or insect control for at least a first part of the environment.

In other words, an image or images of an environment have been acquired. The system can operate in a number of different modes of operation, such as using different UAVs to spray different chemicals, operating at different high voltages to vary the electric field between a spray unit and a weed to be sprayed, varying a distance between the spray unit and a weed to be sprayed by flying the UAV at different heights above the ground and/or above plants. The system analyses the image or images to determine which one or ones of the available modes of operation should be used to control weeds/insects/pests at a specific location or locations of the environment.

In this way, the most appropriate mode of operation can be used for different areas of the environment. Also, at different areas of the environment, different modes of operation can be used, where each mode of operation is the most appropriate for each different area.

Thus, for example, there can be a number of UAVs tethered to a ground unit, such as a vehicle. Each UAV has a spray unit, that can be linked to different reservoirs housed in the ground vehicle. Each UAV can spray a liquid, using a spray gun that operates at a high potential in order to increase the efficiency of spraying. Also, the ground based vehicle can have different herbicides in different reservoirs, and with different pesticides in different reservoirs. Thus, after processing the image at a location it could be determined that there is a particular type of weed that needs to be sprayed with a particular herbicide, with one of the UAVs connected via a conduit to the reservoir of the ground based unit. This UAV then sprays using an electrostatic spray gun at that location. Also, the processing unit can determine what voltage the spray gun should operate in each situation, and control the high voltage power supply accordingly.

According to an example, the at least one high voltage power supply is located within or on the ground based housing unit.

According to an example, the at least one high voltage power supply is located within or on the at least one unmanned aerial vehicle; wherein each unmanned aerial vehicle has a high voltage power supply.

According to an example, the at least one liquid chemical reservoir is located within or on the at least one unmanned aerial vehicle; wherein each unmanned aerial vehicle has a liquid chemical reservoir.

According to an example, the at least one liquid chemical reservoir is located within or on the ground based housing unit.

According to an example, the at least one chemical spray unit is configured such that the atomized liquid weed control chemical is charged after it has been atomized.

According to an example, the at least one part 42 comprises an electrode 42a configured to be positioned within the atomized liquid weed control chemical.

According to an example, the processing unit is configured to analyse the at least one image to determine at least one location for activation of the at least one chemical spray unit.

According to an example, analysis of the at least one image to determine at least one location for activation of the at least one chemical spray unit comprises a determination of at least one location of vegetation in the environment.

According to an example, analysis of the at least one image to determine the at least one location for activation of the at least one chemical spray unit comprises a determination of at least one type of weed and/or a determination of at least one type of pest.

In an example, analysis of the at least one image comprises utilisation of a machine learning algorithm.

In an example, the machine learning algorithm comprises a decision tree algorithm.

In an example, the machine learning algorithm comprises an artificial neural network.

In an example, the machine learning algorithm has been taught on the basis of a plurality of images. In an example, the machine learning algorithm has been taught on the basis of a plurality of images containing imagery of at least one type of weed. In an example, the machine learning algorithm has been taught on the basis of a plurality of images containing imagery of a plurality of weeds. In an example, the machine learning algorithm has been taught on the basis of a plurality of images containing imagery of at least one type of insect. In an example, the machine learning algorithm has been taught on the basis of a plurality of images containing imagery of a plurality of insects.

In an example, the machine learning algorithm has been taught on the basis of a plurality of images containing imagery of at least one type of pest. In an example, the machine learning algorithm has been taught on the basis of a plurality of images containing imagery of a plurality of pests.

In an example, the machine learning algorithm has been taught on the basis of a plurality of images containing imagery of at least one plant affected by one type of pest. In an example, the machine learning algorithm has been taught on the basis of a plurality of images containing imagery of at least one plant affected by different pests. In an example, the machine learning algorithm has been taught on the basis of a plurality of images containing imagery of a plurality of plants affected by pests.

In an example, the processing unit is configured to determine the at least one mode of operation to be used based on the type of weed determined to be at that at least one location in the environment.

In other words, the appropriate mode of operation can be selected to account for the type or types of weeds to be controlled. Thus for example, one type of weed may require only a short duration spray of a particular type of chemical in order to kill that weed, but a different type of weed may require a longer duration of spray of the same chemical to kill the weed. Or, a different chemical can be sprayed on different weeds, or different high voltages utilized, where for example some weeds may only need one surface of a leaf to be sprayed in order to kill it, whilst control of another weed may be dramatically improved when both sides of a leaf are sprayed and based on image processing that determines that this type of weed is present the apparatus can vary the voltages during spraying of that weed to increase the wraparound effect, such that electrostatic forces attract the atomized liquid to the underside of the leaf as well.

According to an example, the system comprises at least one camera, and wherein the at least one image was acquired by the at least one camera.

According to an example, each unmanned aerial vehicle has a camera of the at least one camera.

The location can be a geographical location, with respect to a precise location on the ground, or can be a location on the ground that is referenced to a position of the at least one chemical spray unit. In other words, an absolute geographical location can be utilized or a location on the ground that need not be known in absolute terms, but that is referenced to a location of the at least one chemical spray unit. Thus, by correlating an image with the location where it was acquired, the at least one chemical spray unit can be accurately activated to that location.

In an example, the location is an absolute geographical location.

In an example, the location is a location that is determined with reference to the position of the at least one chemical spray unit. In other words, an image can be determined to be associated with a specific location on the ground, without knowing its precise geographical position, but by knowing the position of the at least one chemical spray unit with respect to that location at the time the image was acquired, the at least one chemical spray unit can then be activated at a later time at that location by moving the at least one chemical spray unit to that location.

In an example, a GPS unit is used to determine, and/or is used in determining, the location of the at least one camera when specific images were acquired.

In an example, an inertial navigation unit is used alone, or in combination with a GPS unit, to determine the location of the at least one camera when specific images were acquired. Thus for example, the inertial navigation unit, comprising for example one or more laser gyroscopes, is calibrated or zeroed at a known location and as it moves with the at least one camera the movement away from that known location in x, y, and z coordinates can be determined, from which the location of the at least one camera when images were acquired can be determined.

In an example, image processing of acquired imagery is used alone, or in combination with a GPS unit, or in combination with a GPS unit and inertial navigation unit, to determine the location of the at least one camera when specific images were acquired.

In an example, the processing unit is configured to analyse the at least one image to activate the at least one high voltage power supply to hold the at least one part of the at least one chemical spray unit at a high voltage with respect to zero volts potential.

In an example, at least one activation time for the at least one high voltage power supply comprises at least one activation time for the at least one chemical spray unit. In other words, the apparatus powers up the spray unit in terms of raising the appropriate part to a high potential and holding it at that high potential, and then the spray unit activates to atomize and charge the atomized liquid and then the spraying of the liquid stops, but the high voltage is still being applied and the atomized liquid is attracted to the weeds because of the electrostatic field. In this way, the system only powers up to high voltage when required, with power savings as well as improved safety being provided.

Fig. 2 shows a weed control method 200 in its basic steps. The method 200 comprises:
in a providing step 210, also referred to as step a), providing a processing unit with at least one image of an environment;
in an analyzing step 220, also referred to as step b), analysing by the processing unit the at least one image to activate at least one chemical spray unit;
in an atomizing and charging step 230, also referred to as step c), atomizing and charging a liquid chemical by the at least one chemical spray unit; wherein the at least one chemical spray unit has at least one part configured to be held at high voltage with respect to zero volts potential; and wherein the at least one high voltage power supply and the at least one chemical spray unit are configured to hold the at least one part of the at least one chemical spray unit at a high voltage with respect to zero volts potential, such that the atomized liquid chemical is electrically charged; and
wherein, the at least one chemical spray unit is located within or on at least one unmanned aerial vehicle, wherein each unmanned aerial vehicle has a chemical spray unit; wherein, at least one liquid chemical reservoir is configured to hold a liquid chemical; wherein, the at least one chemical spray unit is in liquid communication with the at least one liquid chemical reservoir; wherein, the at least one unmanned aerial vehicle is in electrical connection with a ground based housing unit.

In an example, the ground based housing unit is a vehicle.

In an example, the at least one high voltage power supply is located within or on the ground based housing unit.

In an example, the at least one high voltage power supply is located within or on the at least one unmanned aerial vehicle; wherein each unmanned aerial vehicle has a high voltage power supply.

In an example, the at least one liquid chemical reservoir is located within or on the at least one unmanned aerial vehicle; wherein each unmanned aerial vehicle has a liquid chemical reservoir.

In an example, the at least one liquid chemical reservoir is located within or on the ground based housing unit.

In an example, the at least one chemical spray unit is configured such that the atomized liquid weed control chemical is charged after it has been atomized.

In an example, the at least one part comprises 42 an electrode 42a configured to be positioned within the atomized liquid weed control chemical.

In an example, the processing unit is configured to analyse the at least one image to determine at least one location for activation of the at least one chemical spray unit.

In an example, analysis of the at least one image to determine at least one location for activation of the at least one chemical spray unit comprises a determination of at least one location of vegetation in the environment.

In an example, analysis of the at least one image to determine the at least one location for activation of the at least one chemical spray unit comprises a determination of at least one type of weed and/or a determination of at least one type of pest.

In an example, the at least one image was acquired by the at least one camera.

In an example, each unmanned aerial vehicle has a camera of the at least one camera.

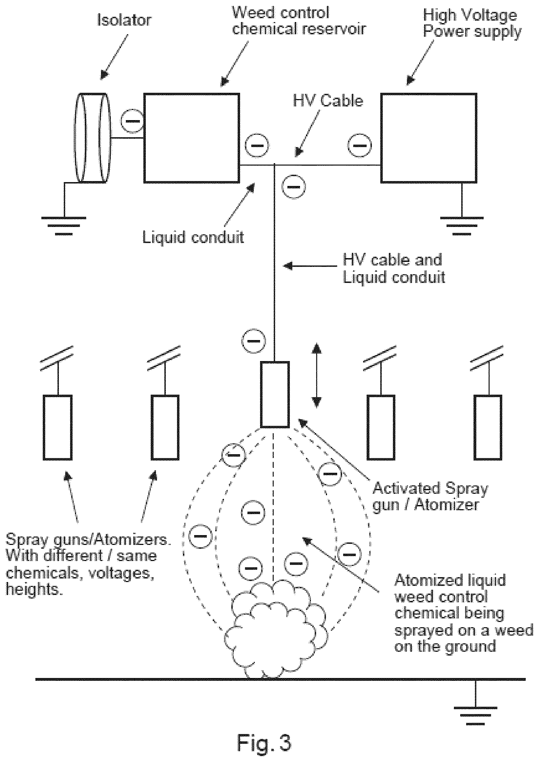

The system and method for weed control are now described in more detail in conjunction with Figs. 3-6, which relate to weed control in the environment of a railway track. A system as described above operates along a train line. A number of UAVs are tethered to a train, where each UAV has the capabilities to atomize and spray one or a number of liquid weed control chemicals. However, the system could comprises a tractor in a field with tethered UAVs, being used to spray in and around the field, or a narrow tractor in a vineyard with tethered UAVs used to spray the vines.

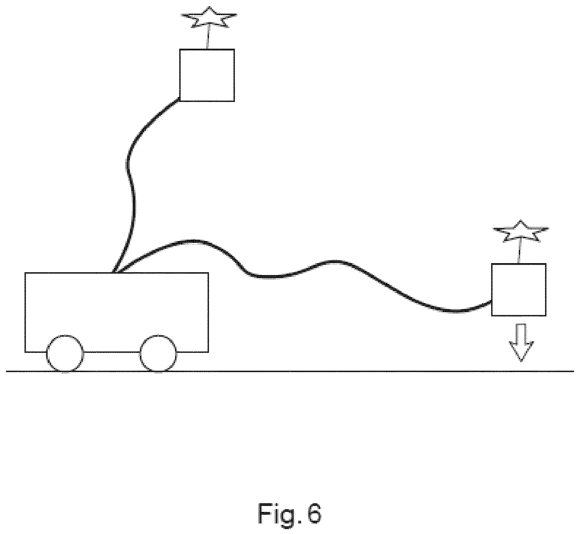

Fig. 3 shows parts of an example of a weed control system. Mounted on a train are a number of reservoirs each holding a different liquid weed control chemical. Tethered to the train are a number of UAVS - this is shown in Fig. 6. The UAVs have a power connection back to the train. The power is used to drive the motor that turns the rotors of the UAV, and the UAV does not then need a battery to power the rotor motors and other UAV systems. The power cable is twinned with a hollow cable through which liquid weed control chemical can be pumped, and therefore the UAVs do not then need their own reservoir. Each UAV has a spray gun or atomizer, and each UAV is connected to a separate reservoir. A high voltage power supply is housed in the train, and HV cables run between the train and each UAV. Each of the different reservoirs is connected to at least one UAV. Thus each liquid weed control chemical can be sprayed by at least one UAV and a certain chemical that is used most frequently can be connected to more than one UAV. The high voltage power supply or generator draws its power from the train via the power cable running back to the train. In Fig. 3 a schematic representation of a high voltage power supply connected to a spray gun of one UAV is shown. Also shown are representations of a number of other spray guns that are housed in different UAVs that are similarly tethered to the train. The atomizer or spray gun is electrically connected via a high voltage cable to the high voltage power supply. This can operate in the range (+/-) 20-200kV. In the example shown the atomizer is operating at minus (-)100kV. The liquid is required in this instance to be held at or close to -100kV when it is being atomized. This is achieved through connection of the high voltage supply to the atomizer housing, which is in contact with the liquid to be atomized. The reservoir is also held at high potential, requiring an electrical isolator to be used, as shown in Fig 3, and the cable running back to the train is appropriately shielded. However, because the liquid is conductive, the high voltage supply could be connected to the reservoir directly within the train, and the atomizer would still be held at or close to -100kV as long as the cable was not too long.

Continuing with Fig. 3 the atomizer atomizes the liquid weed control chemical using pressurized air, coming from a compressor in a manner similar to that used for paint spray guns. The compressor, not shown, also draws its power from the train via the power cable running from the UAV to the train. The liquid droplets are negatively charged and are attracted to the weed at ground potential (zero volts). However, different ways of atomizing the liquid are possible and as such the means to atomize the liquid are not shown in Fig. 3. Also, the atomizer can operate at a positive high voltage and the liquid droplets be positively charged, which are then attracted to the weed at ground potential.

On the basis of acquired imagery, discussed in more detail below, the location and type of weed is determined. A processing unit, not shown, determines the specific liquid weed control chemical to be used, and the optimum spraying conditions for spraying of the weed. A specific liquid weed control chemical, linked to an atomizer carried by one of the UAVs, is determined as being required to spray the weed. The UAV flies over the weed and descends until the atomizer is at an optimum height with respect to the required spraying conditions of voltage and field strength, which also takes into account the height of the weed above the ground. The voltage can be adjusted is necessary and is applied to the atomizer. The atomizer atomizes the liquid and the fine spray is electrically charged and attracted to the weed to cover it as required, including the sides and undersides of the weed leaves. Rather than operate at different voltages, the atomizer can operate at a single voltage which need not be switched on and off but could always be one, and rather than operate at different heights the UAV can operate its atomizer at a set height above the ground.

As the high voltage power supply is carried within the train, then the atomizers in each UAV can all be connected to the same high voltage supply. However, there can be a number of different high voltage supplies in the train, each connected only to one UAV.

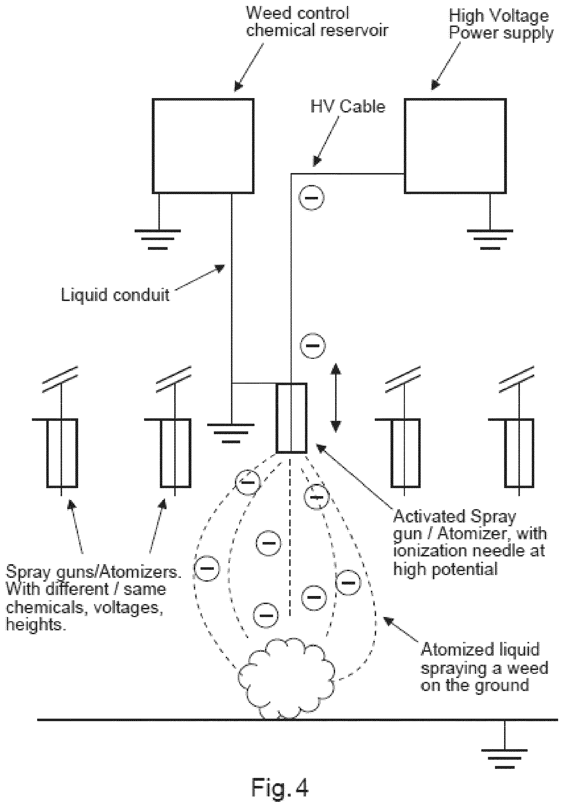

Fig. 4 shows parts of an example of a weed control system, that is similar to that described with respect to Fig. 3 but has the added advantage that less of the parts of the system need to be held at high voltage. Again, liquid weed control reservoirs are housed within a train, to which a number of UAVs are tethered with power running to each UAV as well as a liquid conduit running to each UAV. Each UAV must now have its own high power voltage supply, which is a Cockcroft-Walton generator that draws its power from the train via a power cable running back to the train. However, the high voltage is applied to an ionization needle of the spray gun or atomizer. Again, the atomizer atomizes the liquid weed control chemical. However, the liquid is not held at a high potential because the body of the atomizer is isolated from the ionization needle. The ionization needle is situated in the atomized liquid stream, the air is ionized, and ions are attracted to the liquid droplets which become charged. In this way the reservoir as well as the atomizer body need not be at high potential, and the cable running from the UAV to the train is only at low potential. In this system the efficiency of electrostatic charging the liquid chemical can be less than the direct charging mechanism shown in Fig. 3, but there are safety advantages provided. The other features, such as operational voltages and heights, are as described for Fig. 3.

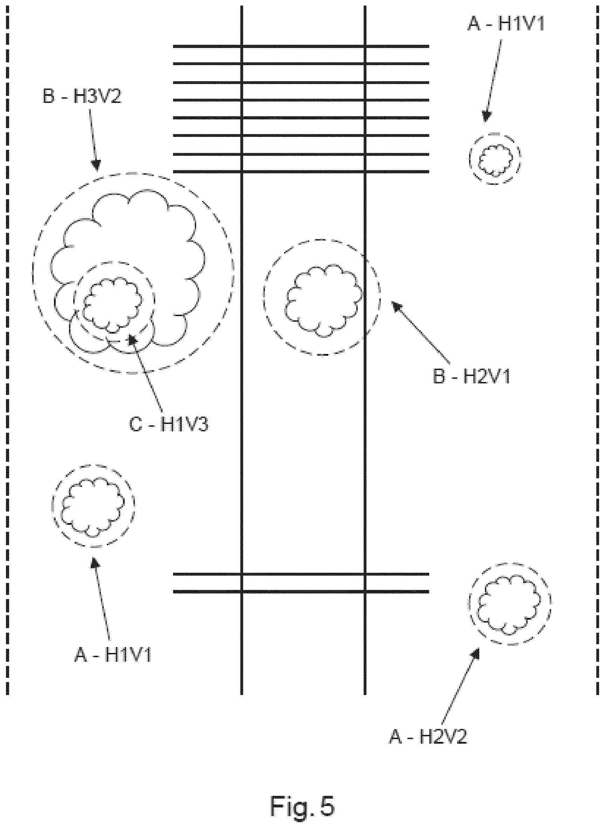

Fig. 5 shows a representation of a railway environment, showing the railway tracks and the ground to the side of the tracks. A number of weed areas are shown, with a large clump of one type of weed having a clump of a different type of weed within it. Shown in Fig. 5 are the specific modes of operation of spray units that have been determined to be activated for these specific weeds, through a UAV flying to that location and operating its spray gun in an appropriate manner. Thus, three different chemicals "A", "B" and "C" can be sprayed, and it has been determined that optimum operation is when UAVs fly at a height above the ground to position spray units such that they operate at three different heights "HI", "H2" and "H3", and operate at three voltage levels "V1", "V2" and "V3". Thus, a particular type of weed has been identified that is of a size that requires it to be sprayed with chemical A, at a voltage level V1 and at a height H1, with this existing in two locations. A particular type of weed has been identified that is of a size that requires it to be sprayed with chemical A, at a voltage level V2 and at a height H2, with this existing in one location. This could be the same type of weed as that discussed previously that was also sprayed with chemical A, but is of a size that requires slightly different height and voltage settings to optimize the transfer of atomized liquid weed control chemical to the weed, or can be a different weed type with the different settings being optimal for control via spraying of that weed. Similarly, another weed has been identified that needs to be sprayed with chemical B, at a voltage V1 and at a height H2. There is a large clump of weed (that could be the same type as the previous weed or a different weed) that needs to be sprayed with chemical B, at a voltage V2 and at a height H3. But found within that clump of weed is an isolated different type of weed that needs to be sprayed with a particularly strong chemical C, at a height H1 and at a voltage V3. In this way, weeds are controlled in an optimized manner with increased transfer of chemical to the weed enabling less chemical to be used, and with a further reduction in the use of the most aggressive chemicals, which are applied only where absolutely necessary. This determination of what mode of operation of the different spray units in terms of chemical, voltage and height of operation can be considered to be the weed control map discussed above, with UAVs connected to appropriate chemical reservoirs flying to the required locations, hovering above a weed at a required height and charging the sprayed liquid at the correct level in order to optimally spray specific weeds.

Fig. 6 shows an example of a weed control system, where several UAVs are tethered to a train containing reservoirs of weed control chemical, and are spraying around the vicinity of the railway track to control weeds. However, the vehicle could equally be a tractor or truck driving around or within a field, within which chemical reservoirs are housed and the UAVs are being used to control weeds in the field. The UAVs or drones are as described above, and are in in the process of spraying a railway track/field and assessing what parts of a track/field need to be sprayed. Each UAV has a camera. The drones fly along and around the railway track, or around and within the field. The cameras acquire imagery of the environment of the railway track/field, with this being the ground between the track and the ground to the sides of the track, or the area within the boundary of the field - within the distance that the UAV can fly from the vehicle, which is governed by the length of the cable running from the UAV to the vehicle. The environment being imaged is that that is required to have weeds controlled. There need not be several drones, and one drone with one camera can acquire the necessary imagery. Indeed, the imagery could have been acquired by a camera or cameras that were hand held by personnel visiting the railway track/field environment, by a plane, satellite or by a train that has run along the railway track/field for example. The imagery acquired by the cameras is at a resolution that enables vegetation to be identified as vegetation and indeed can be at a resolution that enables one type of weed to be differentiated from another type of weed. The acquired imagery can be colour imagery but need not be. The imagery acquired by the drones is transmitted to a processing unit. The imagery can be transmitted to the processing unit as soon as it has been acquired by the cameras. Thus, UAVs or drones with cameras can fly around a railway track or around and within a field and that imagery can be immediately transmitted to a processing unit. The vehicle (the train or tractor/truck) can house the processing unit, or one of the UAVs can house the processing unit, or indeed each UAV can have its own processing unit. In Fig. 6, the processing unit is housed within the train/truck and imagery is sent back down each cable connecting each UAV to the train/truck. The UAVs/drones can fly around a track/field, or indeed other UAVs that specifically acquire imagery fly around the field/track. The UAVs that acquire the imagery have Global Positioning Systems (GPS) and this enables the location of acquired imagery to be determined. For example the orientation of cameras and the position of the drone when imagery was acquired can be used to determine the geographical footprint of the image at the ground plane. The drones can also have inertial navigation systems, based for example on laser gyroscopes. In addition to being used to determine the orientation of the drone and hence of the camera, facilitating a determination of where on the ground the imagery has been acquired, the inertial navigation systems can function alone without a GPS system to determine the position of the drone, by determining movement away from a known or a number of known locations. Then, the drones/UAVs that are to do the spraying, if the same as the ones used to acquire the imagery, can fly to the appropriate location using their GPS systems and spray a weed control chemical at that location. This enables one tethered UAV to acquire imagery of a weed and a determination can be made that it needs to be sprayed by a particular weed control chemical, but that this UAV is linked to a reservoir containing a different weed control chemical. However, this UAV can log the position of the weed, in terms of the GPS position on the ground. Then, a different UAV, that is connected to the correct weed control chemical containing reservoir, flies to this location and sprays the weed. This situation also applies is different specific UAVs are used to acquire imagery, which is then transmitted to the processing unit. Then UAVs that are tethered to the train/truck each again have a GPS unit, and need not have cameras, but can then fly to the appropriate locations and spray the necessary weed control chemicals to control weeds. Not shown in Fig. 6 are a number of cable support UAVs (CSUAVs). These are small UAVs that fly above the cable tethering the spraying UAVs to the vehicle. A line connects each CSUAV to a cable between a spray UAV and the vehicle, and the CSUAV flies above the ground above a height greater than the length of the line, and in this way the cable between the vehicle and a spray UAV is kept off the ground and does not become tangled. More than one CSUAV can be connected to a cable, and the line also serves to supply power from the train to the CSUAV in order that it does not need to carry batteries but can use power from the train to drive its rotors and other power systems.

However, in some situations the UAVs do not need to have GPS systems to determine where they are, and an immediate decision to spray or not can be made on the basis of image analysis. In some situations, each UAV can fly over each part of the ground area and sprays its chemical where required. Also, in some situations only one weed control chemical is being used, and again each UAV can acquire imagery that is immediately analyzed to determine to spray or not to spray and where each UAV now needs only fly over a portion of the ground area. Also, in some situations only a determination needs to be made that vegetation is present and if so, it is sprayed with a weed control chemical. This can apply in some railway track situations, although determination of the type of weed/plant present allows for specificity and allows for weeds to be controlled when within a crop.

How the determination to spray a weed, and with what chemical is now discussed in more detail. The processing unit runs image processing software. This software analyses an image to determine the areas within the image where vegetation is to be found. Vegetation can be detected based on the shape of features within acquired images, where for example edge detection software is used to delineate the outer perimeter of objects and the outer perimeter of features within the outer perimeter of the object itself. A database of vegetation imagery can be used in helping determine if a feature in imagery relates to vegetation or not, using for example a trained machine learning algorithm such as an artificial neural network or decision tree analysis. The camera can acquire multi-spectral imagery, with imagery having information relating to the colour within images, and this can be used alone, or in combination with feature detection to determine where in an image vegetation is to be found. As discussed above, because the geographical location of an image can be determined, from knowledge of the size of an image on the ground, the location or locations of vegetation to be found in an image can then be mapped to the exact position of that vegetation on the ground.

The processing unit then runs further image processing software that can be part of the image processing that determines vegetation location on the basis of feature extraction, if that is used. This software comprises a machine learning analyser. Images of specific weeds are acquired, with information also relating to the size of weeds being used. Information relating to a geographical location in the world, where such a weed is to be found and information relating to a time of year when that weed is to be found, including when in flower etc. can be tagged with the imagery. The names of the weeds can also be tagged with the imagery of the weeds. The machine learning analyser, which can be based on an artificial neural network or a decision tree analyser, is then trained on this ground truth acquired imagery. In this way, when a new image of vegetation is presented to the analyser, where such an image can have an associated time stamp such as time of year and a geographical location such as Germany or South Africa tagged to it, the analyser determines the specific type of weed that is in the image through a comparison of imagery of a weed found in the new image with imagery of different weeds it has been trained on, where the size of weeds, and where and when they grow can also be taken into account. The specific location of that weed type on the ground within the environment, and its size, can therefore be determined.

The processing unit has access to a database containing different weed types, and the optimum chemical spray to be used and the mode of operation of a spray gun for that chemical in terms of voltages and field strengths to be used in controlling that weed type, which has been compiled from experimentally determined data. For example, the specific type of chemical to be sprayed on a weed from a number of available chemicals, the duration of spraying to be applied at a specific location for a specific type of weed, and the high voltage to be applied to the atomizer and the field strength to be used, providing information on the height the atomizer should operate at. Thus for example, a specific type of chemical to be used in a chemical spray may be the most optimum for a particular type of weed. The processing unit can then determine that for a single weed or a small clump of this weed at a particular location in the environment the chemical spray gun applying this chemical should be activated at that specific location to control the weeds with that specific chemical. However, that weed could be surrounded by a large clump of a different type of weed, for which a different type of liquid weed control chemical is optimum. Thus, a different chemical can be sprayed over the larger clump, around the first weed. For example, an aggressive chemical can then be sprayed at the specific location of a hard to kill weed, whilst less aggressive chemicals can be sprayed over weeds that are easier to control. Thus, in addition to the atomized spray being electrostatically charged leading to an increase in the chemical being sprayed being deposited on the weed, the type of chemical can be used only when necessary. This leads to a reduction in chemicals used, a reduction in power, and less environmental impact of chemicals. The processing unit ensures that all weeds that need to be controlled, have assigned to them at least chemical to be sprayed in a particular manner via at least one spray gun. The processing unit then creates an appropriate weed control map, detailing what mode or modes of operation of the spray guns should be applied where. The spraying of plants to control pests/insects is carried out in a similar manner, making use of imagery of known pests/insects that are processed as above.

Thus, the cameras of the drones/UAs acquire imagery of an environment that is passed to a processing unit that determines what spray gun carried by which UAV and what modes of spray gun operation should be used at which specific geographical locations in the environment. Thus, in effect a weed map or a weed spray map can be generated that indicates where within the environment specific modes of operation of spray guns, in terms of chemical, voltage, field strength, height, should be used, and an appropriate UAV can fly to that location and use its electrostatic spray gun to efficiently spray weeds.

The above detailed examples have been discussed with respect to a railway and a weed control train. However, rather than a weed control train, a truck or lorry or Unimog can have the spray units and chemical reservoir(s) as discussed above, and on the basis of previously acquired and processed imagery or on the basis of imagery it acquires and processes itself, drives around an agricultural or industrial area or even an area such as an airport and activates the spray units as discussed above to control weeds at specific locations, and even differentiate between weeds and non-weeds such as crop plants in order that only weeds are sprayed. Also, the detailed examples have centred on the control of weeds, through spraying of a herbicide for example. However, plants in a farmer's field can be infested with pests or unwelcome insects, and described system can also identify insects on plants in an equivalent manner to identifying weeds, enabling insecticides to be sprayed where required.

### Image processing to enable analysis to determine a weed type

A specific example of how an image is processed, and determined to be suitable for image processing in order that a type of weed can be determined is now described:
1. A digital image - in particular a colored image - of a weed is captured.
2. Areas with a predefined color and texture within the digital image are contoured within a boundary contour. Typically, one may expect one contoured area from one weed plant. However, there may also be more than one contoured area from different, potentially not connected leafs, from two weed plants, or the like. - Such a detection or determining process detects boundaries of green areas of the digital image. During this process at least one contoured area - e.g., one or more leafs, as well as one or more weed plants - may be built comprising pixels relating to the weed within a boundary contour. However, it may also be possible, that the digital image has captured more than one leaf and/or the stem. Consequently, more than one contoured area may be determined.
3. Determining if the boundary contour covers a large enough area, and determining a sharpness (e.g. degree of focus) of the image data within the boundary contour. This firstly ensures that there will be sufficient image data upon which a determination can be made as to the type of weed, and secondly determines that a minimum quality of the digital image will be satisfied in order that the type of weed can be made.
4. If both criteria in 3) are satisfied, the digital image, and specifically that within the boundary contour is sent to the processing unit for image analysis by the artificial neural network to determine the type of weed as described above.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A weed control system (10), comprising:
- an input unit (20);
- a processing unit (30);
- at least one chemical spray unit (40);
- at least one high voltage power supply (50);
- at least one liquid chemical reservoir (60);
- a ground based housing unit (70);
- at least one unmanned aerial vehicle (80);
wherein, the at least one chemical spray unit is located within or on the at least one unmanned aerial vehicle, wherein each unmanned aerial vehicle has a chemical spray unit;
wherein, the at least one liquid chemical reservoir is configured to hold a liquid chemical;
wherein, the at least one chemical spray unit is in liquid communication with the at least one liquid chemical reservoir;
wherein, the at least one unmanned aerial vehicle is in electrical connection with the ground based housing unit;
wherein, the input unit is configured to provide the processing unit with at least one image of an environment;
wherein, the processing unit is configured to analyse the at least one image to activate the at least one chemical spray unit;
wherein, the at least one chemical spray unit is configured to atomize the liquid chemical;
wherein, the at least one chemical spray unit has at least one part (42) configured to be held at high voltage with respect to zero volts potential; and
wherein, the at least one high voltage power supply and the at least one chemical spray unit are configured to hold the at least one part of the at least one chemical spray unit at a high voltage with respect to zero volts potential, such that the atomized liquid chemical is electrically charged.

2. System according to claim 1, wherein the ground based housing unit is a vehicle.

3. System according to any of claims 1-2, wherein, the at least one high voltage power supply is located within or on the ground based housing unit.

4. System according to any of claims 1-2, wherein, the at least one high voltage power supply is located within or on the at least one unmanned aerial vehicle; wherein each unmanned aerial vehicle has a high voltage power supply.

5. System according to any of claims 1-4, wherein, the at least one liquid chemical reservoir is located within or on the at least one unmanned aerial vehicle; wherein each unmanned aerial vehicle has a liquid chemical reservoir.

6. System according to any of claims 1-4, wherein, the at least one liquid chemical reservoir is located within or on the ground based housing unit.

7. System according to any of claims 1-6, wherein the at least one chemical spray unit is configured such that the atomized liquid weed control chemical is charged after it has been atomized.

8. System according to claim 7, wherein the at least one part (42) comprises an electrode (42a) configured to be positioned within the atomized liquid weed control chemical.

9. System according to any of claims 1-8, wherein, the processing unit is configured to analyse the at least one image to determine at least one location for activation of the at least one chemical spray unit.

10. System according to claim 9, wherein analysis of the at least one image to determine at least one location for activation of the at least one chemical spray unit comprises a determination of at least one location of vegetation in the environment.

11. System according to any of claims 9-10, wherein analysis of the at least one image to determine the at least one location for activation of the at least one chemical spray unit comprises a determination of at least one type of weed and/or a determination of at least one type of pest.

12. System according to any of claims 1-11, wherein the system comprises at least one camera, and wherein the at least one image was acquired by the at least one camera.

13. System according to claim 12, wherein each unmanned aerial vehicle has a camera of the at least one camera.

14. A weed control method (200), comprising:
a) providing (210) a processing unit with at least one image of an environment;
b) analysing (220) by the processing unit the at least one image to activate at least one chemical spray unit;
c) atomizing and charging (230) a liquid chemical by the at least one chemical spray unit; wherein the at least one chemical spray unit has at least one part configured to be held at high voltage with respect to zero volts potential; and wherein the at least one high voltage power supply and the at least one chemical spray unit are configured to hold the at least one part of the at least one chemical spray unit at a high voltage with respect to zero volts potential, such that the atomized liquid chemical is electrically charged; and
wherein, the at least one chemical spray unit is located within or on at least one unmanned aerial vehicle, wherein each unmanned aerial vehicle has a chemical spray unit; wherein, at least one liquid chemical reservoir is configured to hold a liquid chemical; wherein, the at least one chemical spray unit is in liquid communication with the at least one liquid chemical reservoir; wherein, the at least one unmanned aerial vehicle is in electrical connection with a ground based housing unit.

15. A computer program element for controlling a system according to any of claims 1 to 13, which when executed by a processor is configured to carry out the method of claim 14.
